# EUROPÄISCHE PATENTSCHRIFT

(11) **EP 1 169 608 B1**
(45) Veröffentlichungstag und Bekanntmachung des Hinweises auf die Patenterteilung: **22.02.2006**
(21) Anmeldenummer: 00920635.0
(22) Anmeldetag: 30.03.2000
(51) Int. Cl.: F25D 23/06

(54) **KÄLTEGERÄT MIT WÄRMEISOLIERENDER WANDUNG**
COOLING APPARATUS WITH HEAT INSULATING WALL
APPAREIL REFRIGERATEUR AVEC UN PAROI CALORIFUGE

(30) Priorität: 01.04.1999 DE 19915456
(43) Veröffentlichungstag der Anmeldung: 09.01.2002
(73) Patentinhaber: BSH Bosch und Siemens Hausgeräte GmbH, 81739 München (DE)
(72) Erfinder: WENNING, Udo, D-89537 Giengen (DE); EBERHARDT, Hans-Frieder, D-89537 Giengen-Burgberg (DE); NEUMANN, Michael, D-89537 Giengen/Brenz (DE); ZEILER, Thomas, D-89537 Giengen (DE)
(86) Internationale Anmeldenummer: PCT/EP2000/002836
(87) Internationale Veröffentlichungsnummer: WO 2000/060292

(56) Entgegenhaltungen:
- EP-A- 0 860 669
- WO-A-98/29309
- DE-A- 19 520 020
- DE-A- 19 648 305
- DE-U- 29 816 013
- FR-A- 2 755 159
- US-A- 4 668 551

## Beschreibung

Die Erfindung betrifft ein Kältegerät mit einem wärmeisolierenden Gehäuse und einer wärmeisoliereden Tür, wobei das Gehäuse und/oder die Tür einen evakuierten Zwischenraum besitzt, welcher mit evakuierbarem Wärmeisolationsmaterial verfüllt und welcher von einer Außenverkleidung und einer Innenverkleidung vakuumdicht umgrenzt ist.

Auf dem Gebiet der vakuumisolierten Wandungen wie Gehäuse und Türen für Kühlgeräte ist es bekannt, um eine Brauchbarkeitsdauer in der Größenordnung von 15 Jahren für die auf Vakuumisolationstechnik basierenden Gehäuse und Türen zu erreichen, für deren Aufbau aus Edelstahl geformte Hüllwandungen zum Einsatz zu bringen. Derartige Hüllwandungen erfüllen zwar die für die geforderte Brauchbarkeitsdauer erforderliche Leck- bzw. Permeationsrate jedoch ist deren Formgebung und die für deren Aufbau zur Anwendung zu bringende Verbindungstechnik verhältnismäßig fertigungsaufwendig und somit kostenträchtig. Im Hinblick auf den Aufbau der wärmeisolierenden Wandungen ist bereits dafür Sorge zu tragen, daß eine Wärmeleitung über die innere, einen Raum mit bestimmtem Temperaturniveau umgrenzenden Hüllwand auf die äußere, der Raumtemperatur ausgesetzten Hüllwand zumindest weitestgehend unterbunden ist. Hierzu wurden in der Vergangenheit stoßempfindliche membranartige Verbindungselemente zum Einsatz gebracht. Darüber hinaus erfordern die aus dünnwandigen Edelstahl geformten Hüllwände die Anwendung einer prozeßsicheren und langzeitstabilen Verbindungstechnik, welche bei dem bekannten wärmeisolierenden, zu Kältegerätegehäusen und Kältegerätetüren geformten Wandungen als Laserschweißtechnik angesehen wurde. Diese Art von Verbindungstechnik erfordert jedoch verhältnismäßig hohe Investitionskosten in der Fertigung.

Aus der FR 2755 159 A1 ist eine wärmeisolierende oder schallisolierende Platte mit einer Zellenstruktur bekannt. Die Platte ist von einer dünnen, flexiblen und für Gas undurchlässigen Folie umgeben.

In der WO 98/29309 ist eine vakuumisolierte Platte aus festem und porösem Schaum offenbart. Die Platte ist von einem für Gas undurchlässigen flexiblen Beutel umgeben.

In der EP 0 860 669 A1 ist ein wärmeisoliertes Gehäuse offenbart. Das wärmeisolierte Gehäuse umfasst einen gasdichten Behälter, der mit einem Gas und einer Füllung gefüllt ist, und einen Gasbehälter, der mit dem gasdichten Behälter verbunden ist.

Der Erfindung liegt die Aufgabe zugrunde, bei einem kältegerät gemäß dem Oberbegriff des Anspruches 1 mit einfachen Maßnahmen die Nachteile des Standes der Technik zu vermeiden.

Diese Aufgabe wird gemäß der Erfindung durch die Merkamale des kennzeichens gelost.

Durch die Anwendung von Kunststoff für eine oder für beide der Verkleidungen ist das Problem der Unterbindung der Wärmeleitung entlang des Temperaturgradienten zwischen der Innen- und der Außenverkleidung aufgrund der geringen Wärmeleitung des Kunststoffes auf einfache Weise umgangen, wodurch die Verbindung der beiden Verkleidungseinheiten über ein nur aufwendig herzustellendes membranartiges Verbindungselement und deren fertigungstechnisch aufwendiges Anbringen an die Innen- und die Außenverkleidung entfallen kann. Darüber hinaus bietet zum Beispiel eine aus Kunststoff gefertigte Innenverkleidung zusätzlich den Vorzug, daß diese Innenverkleidung und die daran vorgesehenen Funktionselemente, wie Abstützungen für Zwischenböden, Tauwasserauffang- und Tauwasserablaufmaßnahmen durch spanlose Formgebung kostengünstig mitangeformt sein können. Au-ßerdem lassen Verkleidungsteile aus Kunststoff verschiedene Anformungen, wie beispielsweise eine Verdichternische oder dergleichen, kostengünstig zu. Durch den Einsatz von Kunststoffmaterialien ergibt sich zugleich eine im Vergleich zu einem Metallgehäuse nicht unerhebliche Gewichtsreduzierung für ein Kältegerätegehäuse.

Durch die Aufbringung der Mittel zur Reduzierung der Durchlässigkeit von Wasserdampf oder Gas mittels koextrusion oder Kaschieren ergibt sich die Möglichkeit, zwischen dem thermoplastischen Kunststoff und einem im Hinblick auf eine minimale Wasserdampf- und Gasdurchlässigkeit optimierten Werkstoff einen dauerhaften Werkstoffverbund zu realisieren.

Besonders günstig im Hinblick auf eine deutliche Reduzierung der Wasserdampfdurchlässigkeit an der Innen- und/oder der Außenverkleidung sind die Mittel, wenn nach einer nächsten bevorzugten Ausführungsform des Gegenstandes der Erfindung vorgesehen ist, daß die Mittel zur zumindest weitestgehenden Reduzierung der Wasserdampfdurchlässigkeit der Innen- und/oder der Außenverkleidung durch Polyolefine oder durch andere Werkstoffe wie z.B. Polyvinylidenchlorid oder Perfluoralkoxypolymere gebildet sind.

Als besonders vorteilhaft zur Reduzierung der Gasdurchlässigkeit der Innen- und/oder der Außenverkleidung haben sich Mittel gezeigt, wenn nach einer nächsten vorteilhaften Ausgestaltung des Gegenstandes der Erfindung vorgesehen ist, daß die Mittel zur zumindest weitestgehenden Reduzierung der Gasdurchlässigkeit der lnnen- und/oder der Außenverkleidung durch z.B. Ethylen-Vinylalkohol-Copolimerisat oder Polyacrylnitril oder Polyamid gebildet sind.

Eine besonders günstige Verformbarkeit für die Innen- und die Außenverkleidung ergibt sich, wenn nach einer weiteren alternativen Ausführungsform des Gegenstandes der Erfindung vorgesehen ist, daß die Mittel aus einer Kunststoff-Metallverbund-Folie gebildet sind.

Besonders kostengünstig mit unterschiedlicher Formgebung herstellbar ist die Innenverkleidung und die Außenverkleidung, wenn nach einer weiteren bevorzugten Ausführungsform des Gegenstandes der Erfindung vorgesehen ist, daß die Innen- und/oder die Außenverkleidung aus tiefziehfähigem oder im Blasverfahren verformbaren Kunststoff gebildet sind.

Besonders ebenflächige Wandflächen für die als Kältegerätegehäuse oder Kältegerätetür ausgebildete wärmeisolierende Wandung ergeben sich, wenn nach einer nächsten bevorzugten Ausführungsform des Gegenstandes der Erfindung vorgesehen ist, daß das Wärmeisolationsmaterial aus plattenförmigen Körpern gebildet ist.

Besonders günstig im Hinblick auf die Aufrechterhaltung des zur Wärmeisolation notwendigen Vakuums sind die plattenförmigen Körper ausgebildet, wenn nach einer weiteren bevorzugten Ausführungsform des Gegenstandes der Erfindung vorgesehen ist, daß die plattenförmigen Körper durch einen Preßvorgang von Kieselsäure oder Aerogelen erzeugt sind. Durch die Anwendung derartiger, bereits in einem Druckbereich in der Größenordnung von 1 mbar bis 100 mbar eine sehr niedrige Wärmeleitfähigkeit aufweisenden Materialien ist eine kostengünstige Großserienfertigung von Kältegerätegehäusen und Kältegerätetüren mit einer aus Kunststoff gebildeten Innen- und Außenverkleidung möglich.

Als besonders günstig in Bezug auf die Erreichung und den Erhalt einer dauerhaften isolationsgüte haben sich plattenförmige Körper aus Kieselsäure in Verbindung mit aus Kunststoff gebildeten Innen- und Außenverkleidungen gezeigt, wenn nach einer bevorzugten Ausführungsform des Gegenstandes der Erfindung vorgesehen ist, daß die plattenförmigen Körper aus Kieselsäure eine Dichte zwischen 100 kg/m³ und 200 kg/m³ aufweisen.

Ebenso als besonders geeignet zur Erreichung und zum Erhalt einer dauerhaften, auf hohem Niveau befindlichen Isolationsgüte haben sich plattenförmige Körper aus Aerogele in Verbindung mit einer aus Kunststoff erzeugten Innen- und einer Außenverkleidung zur Herstellung wärmeisolierender Wandungen herausgestellt, wenn nach einer alternativen Ausführungsform des Gegenstandes vorgesehen ist, daß die plattenförmigen Körper aus Aerogelen eine Dichte zwischen 100 kg/m³ und 150 kg/m³ aufweisen.

Mit besonders geringem Gewicht und kostengünstig herstellbar sind mit einer Innen- und Außenverkleidung aus Kunststoff versehene wärmeisolierende Wandungen, wenn nach einer weiteren alternativen Ausführungsform des Gegenstandes der Erfindung vorgesehen ist, daß die plattenförmigen Körper aus offenzelligem, geschäumten Wärmeisolationsmaterial bestehen. In diesem Zusammenhang haben sich offenzellige Polyurethanschäume beziehungsweise offenzellige Polystyrolschäume als günstig herausgestellt.

Kältegeräte mit derartigen Kältegerätegehäusen und Kältegerätetüren besitzen bei herkömmlichen Außenabmessungen, zum Beispiel in Form von vorgegebenen Abmessungen einer Möbelnische in einer Küchenzeile einer gegenüber herkömmlichen Kältegeräten vergrößerten Aufnahmeraum zur Einlagerung von Kühl- oder Gefriergut, da eine verbesserte lsolationsgüte bei gegenüber den herkömmlichen Kältegeräten deutlich verminderter Isolationsstärke erreicht ist. Durch die hohe Isolationsgüte ist zu dem der Energieverbrauch der auf diesen wärmeisolierenden Wandungen beruhenden Kältegeräten deutlich gesenkt.

Die Erfindung ist in der nachfolgenden Beschreibung anhand eines in der Zeichnung vereinfacht dargestellten Ausführungsbeispieles erläutert.

Es zeigen:
- Fig. 1: in vereinfachter schematischer Darstellung ein Kältegerätegehäuse mit im Schließzustand befindlicher Tür, in Schnittdarstellung von der Seite und
- Fig. 2: in einem vergrößerten Ausschnitt den Aufbau des Kältegerätegehäuses und der Tür in Schnittdarstellung von der Seite.

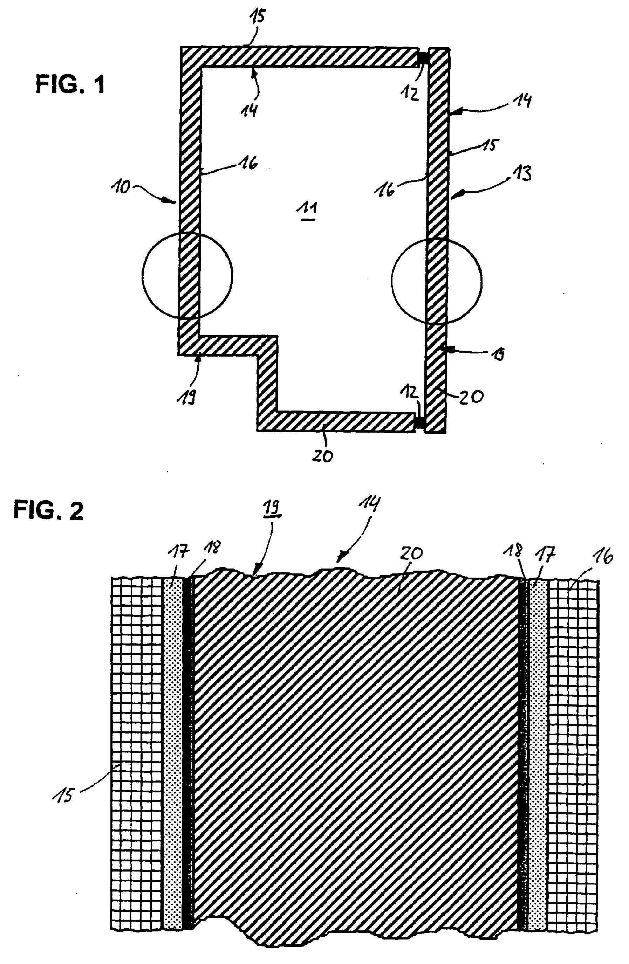

Gemäß Figur 1 ist in vereinfachter schematischer Darstellung ein auf Vakuumisolationsbasis wärmeisolierend ausgebildetes, zur Verwendung für ein Kältegerät geeignetes Gehäuse 10 gezeigt, welches einen als Kälteraum ausgebildeten Nutzraum 11 in sich aufnimmt und welches zum Verschließen des Nutzraumes 11 mit einer über eine Magnetdichtung 12 elastisch an seinem Öffnungsrand aufliegenden Tür 13 ausgestattet ist. Die Tür 13, welche auf gleiche Weise wie das Gehäuse 10 vakuumwärmeisoliert ausgebildet ist, besitzt wie das Gehäuse 10 einen schichtartig gestalteten Wandungsaufbau 14. Dieser umfaßt sowohl für das Gehäuse 10 als auch für die Tür 13 eine aus thermoplastischem Kunststoff spanlos einstückige geformte Außenverkleidung 15, welche für die Anwendung bei der Tür 13 zur Befestigung eines nicht gezeigten Türgriffes dient, während sie im Falle des Gehäuses 10 dessen Außenmantel bildet. Im Abstand zur Außenverkleidung 15 weist der schichtähnliche Wandungsaufbau 14 eine ebenso aus thermoplastischem Kunststoff spanlos geformte einstückige Innenverkleidung 16 auf, welche im Falle des Gehäuses 10 zur Auskleidung des Nutzraumes 11 dient und welche für die Türanwendung dem Nutzraum 11 zugewandt ist.

Wie insbesondere Figur 2 zeigt, sind die Innenverkleidung 16 und die Außenverkleidung 15 im vorliegenden Ausführungsbeispiel an ihrer einander zugewandten Innenseite mit einer die Wasserdampfdurchlässigkeit zumindest deutlich reduzierenden oder gar hemmenden, durch koextrudieren oder kaschieren aufgebrachten Schicht 17 auf der Basis von Polyolefinen wie beispielsweise Polyethylen hoher Dichte, Polypropylen oder anderen Werkstoffen wie z. B. Polyvinylidenchlorid oder Perfluoralkoxypolymere. Auf diese Schicht ist wiederum eine zumindest die Gasdurchlässigkeit deutlich reduzierende oder gar hemmende Schicht 18 beispielsweise aus Ethylen-Vinylalkohol-Copolymerisat oder Polyacrylnitril oder Polyamid durch Koextrusion oder Kaschierung aufgebracht. Beispielsweise eignen sich eine die Gasdurchlässigkeit hemmende Schicht aus Ethylen-Vinylalkohol-Copoümersat mit einer Schichtdicke von ca. 470 µm und eine als Wasserdampfsperre dienende Schicht aus Perfluoralkoxypolymere mit einer Schichtdicke von 30 - 35 µm in Kombination mit einer Außenverkleidung 15 und einer Innenverkleidung 16 aus schlagzähem Polystyrol mit einer Materialstärke von 0,8 - 2,0 mm zum Gehäuse- und Türenbau. Die mit den Schichten 17 und 18 versehene Außenverkleidung 15 und Innenverkleidung 16 sind an ihren freien Enden miteinander beispielsweise durch Verschweißen, Verkleben oder dergleichen vakuumdicht verbunden und umschließen zusammen eine evakuierbaren Zwischenraum 19. Dieser ist mit plattenförmigen Wärmeisolationsmaterial 20 beispielsweise aus zu plattenartigen Formkörpem gepreßter Kieselsäure mit einer Dichte zwischen 100 kg/m³ bis 200 kg/m³ oder Aerogelen mit einer Dichte wischen 100 kg/m³ und 150 kg/m³ verfüllt, wobei sich für diesen Zweck auch Wärmeisolationsmaterialien wie offenzellige Polyurethanschäume oder offenzellige Polystyrolschäume eignen.

## Patentansprüche

1. Kältegerät mit einem wärmeisolierenden Gehäuse (10) und einer wärmeisolierenden Tür (13), wobei das Gehäuse (10) und/oder die Tür (13) einen evakuierten Zwischenraum besitzt, der mit evakuierbarem Wärmeisolationsmaterial (20) verfüllt und der von einer Außenverkleidung (15) und einer Innenverkleidung (16) vakuumdicht umgrenzt ist, **dadurch gekennzeichnet, daß** die Innenverkleidung (16) einstückig und/oder die Außenverkleidung (15) einstückig aus thermoplastischem Kunststoff geformt ist oder sind, wobei die Innenverkleidung und/oder die Außenverkleidung mit Mitteln (17) zur Reduzierung ihrer Wasserdampfdurchlassigkeit und mit Mitteln (18) zur Reduzierung ihrer Gasdurchlässigkeit versehen sind und daß die Mittel (17, 18) zur Reduzierung der Wasserdampf- und Gasdurchlässigkeit durch Koextrusion oder Kaschieren an der Innenwerkleidung (16) und/oder der Außenverkleidung (15) aufgebracht ist oder sind.

2. Kältegerät nach Anspruch 1, **dadurch gekennzeichnet, daß** die Mittel (17) zur Reduzierung der Wasserdampfdurchlässigkeit zur zumindest weitestgehenden Reduzierung der Wasserdampfdurchlässigkeit der Innenverkleidung (16) und/oder der Außenverkleidung (15) durch Polyolefine oder durch andere Werkstoffe wie z.B. Polvinylidenchlorid oder Perfluoralkoxypolymere gebildet sind.

3. Kältegerät nach einem der Ansprüche 1 und 2, **dadurch gekennzeichnet, daß** die Mittel (18) zur Reduzierung der Gasdurchlässigkeit durch Werkstoffe wie Etyhlen-Vinylalkohol-Copolymerisat oder Polyacrylnitril oder Polyamid gebildet sind.

4. Kältegerät nach Anspruch 1, **dadurch gekennzeichnet, daß** die Mittel zur Reduzierung der Wasserdampf- und Gasdurchlässigkeit aus einer Kunststoffmetallverbundfolie gebildet sind.

5. Kältegerät nach einem der Ansprüche 1 bis 4, **dadurch gekennzeichnet, daß** die Innenverkleidung (16) und/oder die Außenverkleidung (15) aus tiefziehfähigem oder im Blasverfahren verformbaren Kunststoff gebildet sind.

6. Kältegerät nach einem der Ansprüche 1 bis 5, **dadurch gekennzeichnet, daß** die Innenverkleidung (16) und die Außenverkleidung (15) eine Materialstärke von 0,8 mm ÷ 2,0 mm aufweisen.

7. Kältegerät nach Anspruch 1, **dadurch gekennzeichnet, daß** das Wärmeisolationsmaterial (20) aus plattenförmigen Körpern gebildet ist.

8. Kältegerät nach Anspruch 7, **dadurch gekennzeichnet, daß** die plattenförmigen Körper durch einen Preßvorgang von Kieselsäure oder Aerogelen erzeugt sind.

9. Kältegerät nach einem der Ansprüche 7 oder 8, **dadurch gekennzeichnet, daß** die plattenförmigen Körper aus Kieselsäure eine Dichte zwischen 100 kg pro/m³ und 200 kg/m³ aufweisen.

10. Kältegerät nach einem der Ansprüche 7 oder 8 **dadurch gekennzeichnet, daß** die plattenförmigen Körper aus Aerogele eine Dichte zwischen 100 kg/m³ und 150 kg/m³ aufweisen.

11. Kältegerät nach Anspruch 7, **dadurch gekennzeichnet, daß** die plattenförmigen Körper aus offenzelligen, geschäumten Wärme-isolationsmaterial gebildet sind.

## Claims

1. Refrigerating appliance with a thermally insulating housing (10) and a thermally insulating door (13), wherein the housing (10) and/or the door (13) have an evacuated intermediate space, which is filled with evacuatable thermal insulation material (20) and vacuum-tightly surrounded by an outer lining (15) and an inner lining (16), **characterised in that** the inner lining (16) and/or the outer lining (15) is or are respectively integrally formed from thermoplastic plastics material, wherein the inner lining and/or the outer lining is or are provided with means (17) for reducing the permeability thereof to water steam and with means (18) for reducing the permeability thereof to gas and that the means (17, 18) for reducing the water steam permeability and gas permeability is or are applied by coextrusion or laminating at the inner lining (16) and/or the outer lining (15).

2. Refrigerating appliance according to claim 1, **characterised in that** the means (17) for reducing the water steam permeability are, for at least substantial reduction in the water steam permeability of the inner lining (16) and/or the outer lining (15) formed by polyolefines or by other materials such as, for example, polyvinylidenechloride or perfluoralkoxy polymers.

3. Refrigerating appliance according to one of claims 1 and 2, **characterised in that** the means (18) for reducing the gas permeability are formed by materials such as ethylenevinylalcohol copolymerisate or polyacrylnitrile or polyamide.

4. Refrigerating appliance according to claim 1, **characterised in that** the means for reducing the water steam and gas permeability are formed from a plastics material and metal composite foil.

5. Refrigerating appliance according to one of claims 1 to 4, **characterised in that** the inner lining (16) and/or the outer lining (15) is or are formed from plastics material capable of deep drawing or deformable in a blow-moulding method.

6. Refrigerating appliance according to one of claims 1 to 5, **characterised in that** the inner lining (16) and the outer lining (15) have a material thickness of 0.8 millimetres to 2.0 millimetres.

7. Refrigerating appliance according to claim 1, **characterised in that** the thermal insulation material (20) is formed from plate-shaped bodies.

8. Refrigerating appliance according to claim 7, **characterised in that** the plate-shaped bodies are produced by a pressing process of silica or aerogels.

9. Refrigerating appliance according to one of claims 7 and 8, **characterised in that** the plate-shaped bodies of silica have a density between 100 kg/m³ and 200 kg/m³.

10. Refrigerating appliance according to one of claims 7 and 8, **characterised in that** the plate-shaped bodies of aerogels have a density between 100 kg/m³ and 150 kg/m³.

11. Refrigerating appliance according to claim 7, **characterised in that** the plate-shaped bodies are formed from open-cell, foamed thermal insulation material.

## Revendications

1. Appareil frigorifique avec un habillage calorifuge (10) et une porte calorifuge (13), l'habillage (10) et/ou la porte (13) possédant un espace intermédiaire où le vide a été fait, qui est rempli d'un matériau calorifuge (20) où le vide peut être fait et qui est entouré en étant étanche au vide d'un revêtement extérieur (15) et d'un revêtement intérieur (16), **caractérisé en ce que** le revêtement intérieur (16) est formé d'une seule pièce et/ou le revêtement extérieur (15) est ou sont formé(s) d'une seule pièce en matière thermoplastique, le revêtement intérieur et/ou le revêtement extérieur étant doté(s) de moyens (17) pour réduire leur perméabilité à la vapeur d'eau et de moyens (18) pour réduire leur perméabilité aux gaz et **en ce que** les moyens (17, 18) visant à réduire la perméabilité à la vapeur d'eau et aux gaz est ou sont appliqué(s) par coextrusion ou laminage sur le revêtement intérieur (16) et/ou le revêtement extérieur (15).

2. Appareil frigorifique selon la revendication 1, **caractérisé en ce que** les moyens (17) visant à réduire la perméabilité à la vapeur d'eau pour réduire au moins en grande partie la perméabilité à la vapeur d'eau du revêtement intérieur (16) et/ou du revêtement extérieur (15) sont formés par de la polyoléfine ou par d'autres matières comme, par exemple, du chlorure de polyvinylidène ou des polymères perfluoroalcoxy.

3. Appareil frigorifique selon les revendications 1 et 2, **caractérisé en ce que** les moyens (18) visant à réduire la perméabilité aux gaz sont formés par des matières telles qu'un copolymère éthylène-alcool vinylique ou du polyacrylonitrile ou du polyamide.

4. Appareil frigorifique selon la revendication 1, **caractérisé en ce que** les moyens visant à réduire la perméabilité à la vapeur d'eau et aux gaz sont formés par une feuille composite de métal et de matière synthétique.

5. Appareil frigorifique selon l'une des revendications 1 à 4, **caractérisé en ce que** le revêtement intérieur (16) et/ou le revêtement extérieur (15) sont formés d'une matière synthétique déformable par emboutissage profond ou par soufflage.

6. Appareil frigorifique selon l'une des revendications 1 à 5, **caractérisé en ce que** le revêtement intérieur (16) et le revêtement extérieur (15) présentent une épaisseur de matériau de 0,8 mm ÷ 2,0 mm.

7. Appareil frigorifique selon la revendication 1, **caractérisé en ce que** le matériau calorifuge (20) est formé d'habillages en forme de plaques.

8. Appareil frigorifique selon la revendication 7, **caractérisé en ce que** les habillages en forme de plaque sont produits par un processus de compression d'acide silicique ou d'aérogels.

9. Appareil frigorifique selon l'une des revendications 7 ou 8, **caractérisé en ce que** les habillages en forme de plaques en acide silicique présentent une densité entre 100 kg/m³ et 200 kg/m³.

10. Appareil frigorifique selon l'une des revendications 7 à 8, **caractérisé en ce que** les habillages en forme de plaques composés d'aérogels présentent une densité située entre 100 kg/m³ et 150 kg/m³.

11. Appareil frigorifique selon la revendication 7, **caractérisé en ce que** les habillages en forme de plaques sont formés d'un matériau calorifuge à alvéoles ouvertes, transformé en mousse.
